# EUROPEAN PATENT SPECIFICATION

(11) **EP 2 919 596 B1**
(45) Date of publication and mention of the grant of the patent: **28.09.2016**
(21) Application number: 13789592.6
(22) Date of filing: 14.11.2013
(51) Int. Cl.: A23N 12/10

(54) **APPARATUS FOR DRYING AND/OR ROASTING BEANS OR NIBS**
VORRICHTUNG ZUM TROCKNEN UND/ODER RÖSTEN VON BOHNEN ODER NIBS
APPAREIL POUR SÉCHER ET/OU TORRÉFIER DES FÈVES OU DES GRAINES

(30) Priority: 14.11.2012 EP 12192655
(43) Date of publication of application: 23.09.2015
(73) Proprietor: Royal Duyvis Wiener B.V., 1540 AA Koog aan de Zaan (NL)
(72) Inventor: KOELEMEIJER, Reiner, NL-1561 DK Krommenie (NL)
(74) Representative: De Vries & Metman
(86) International application number: PCT/EP2013/073884
(87) International publication number: WO 2014/076211

(56) References cited:
- EP-A2- 0 328 791
- WO-A1-92/12643
- DE-A1- 2 116 807
- GB-A- 139 503
- US-A- 1 547 655
- US-A- 1 566 430
- US-A- 2 279 362
- US-A- 4 559 720

## Description

The invention relates to an apparatus for drying and/or roasting beans, such as cocoa beans, or parts of beans, such as nibs, comprising a frame, a drum for receiving the (parts of) beans, rotatably mounted in the frame and provided with an inlet for a fluid, in particular a gas, such as heated air, a fan for feeding the fluid via the inlet to the drum, and a driving means for rotating the drum. Typically, the apparatus further comprises a burner or the like for heating the exterior wall of the drum.

WO 2009/127728 discloses a method for drying and/or roasting cocoa nibs and/or cocoa nib pieces in a drum. In addition to heating the drum from the outside for transferring heat by convection, clean hot gas is fed to the drum.

Also, in WO 92/12643, to avoid having to dry and roast coffee and cocoa beans (indicated by numeral 10 in the Figure of WO 92/12643) directly in flue gas in a drying furnace, the drying takes place in a drum (6) to which air (1) is supplied, said air being heated by flue gas (5) from a burner (3) in a heat exchanger (18), and where the flue gases (5) are subsequently supplied to the exterior of the drum (6). Thus, the drying of the beans (10) in the drum (6) is performed totally cut off from the flue gases (5), eliminating the risk that the beans will become exposed to pollution from the flue gases. At the same time the beans (10) are heated uniformly partly from the sides of the drum and partly by the air (1) through the drum. According to WO 92/12643, this creates an effective and yet gentle drying and roasting at no risk of partial overheating causing the beans to be burned.

In the embodiment shown in the Figure of WO 92/12643, the drum 6 is provided, at its ends, with an inlet and an outlet pipe to re-circulate the air through the drum. The capacity of the drum is up to 240 kilos of beans.

US 2,279,362 discloses a drum (15) fitted with a series of sheet metal partitioning discs which are pierced by central apertures through which a hollow core member (26) extends. End discs (21) are secured to the drum while further discs are supported by the core member with a loose fit in the drum. The core member forms a conduit for hot air for drying and roasting purposes and adjacent the discharge end of the drum opens into the drum.

US 1,547,655 relates to a method of roasting material, which consists in heating pure air, next directing the pure heated air unmixed with any products of combustion upon the batch of material to be roasted, and lastly checking the roast by an admixture of atmospheric air with said pure heated air.

GB 139 503 relates to a roasting apparatus suitable for the treatment of grains, seeds, beans, coffee, cocoa, soya beans and the like, as also of powders and flour, in which a group of tubes passes through the roasting receptacle and so that the mass is distributed over a large area to allow of a rapid heating or cooling in a closed vessel.

EP 328 791 relates to a coffee beans roasting device comprising a perforated rotary drum.

To this end, the apparatus according to the present invention is characterized as defined in claim 1. In an embodiment, the inlet extends through a part of the driving means, e.g. through a driven pulley or gear of the driving means.

Thus, construction and/or operation of the apparatus is simplified, more robust and better suited for use on an industrial scale.

In an embodiment, the apparatus comprises a door located on the end of the drum opposite the fluid inlet and the driving means.

In a further embodiment, the apparatus comprises an outlet and/or inlet for the (parts of) beans, which outlet and/or inlet is located on the end of the drum opposite the fluid inlet and the driving means, preferably in the door.

In another embodiment, an outlet for the fluid, in addition to the outlet for the (parts of) beans, is located on the end of the drum opposite the fluid inlet and the driving means, i.e. the opposite end of the drum comprises both an outlet for discharging nibs or beans from the drum and an exhaust for the fluid.

To prevent clogging, in an embodiment, the inlet for the fluid comprises a tube for containing the fluid and a means, preferably a conveying screw positioned inside the tube, for returning materials originating from the drum to the drum.

In another embodiment, the apparatus comprises a heater and a controller for heating the fluid, prior to it being fed to the drum, to a temperature in a range from 110 to 200 °C.

Within the framework of the present invention the adjective "industrial" is defined as having a capacity of at least 2000 kg of (parts of) beans per batch.

In an embodiment, the outlet of the drum roaster comprises a mechanism for moving the door rearwards in axial direction over a limited distance, e.g. a distance in a range from 2 to 15 centimeters, thus providing, e.g. after roasting, sufficient clearance for the nibs to exit the drum, e.g. via a chute. In a refinement, the clearance is at least substantially annular.

The invention will now be explained in more detail with reference to the figure, which schematically shows an example of a drum roaster according to the present invention.

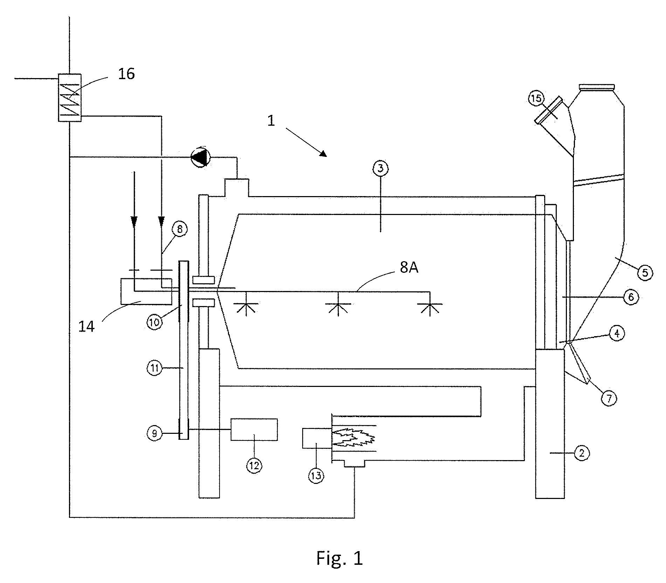

Figure 1 is a cross-sectional side view of a drum roaster in accordance with the present invention.

Figure 1 is a cross-sectional side view of a drum roaster 1 in accordance with the present invention for drying and/or roasting cacao nibs. The drum roaster comprises a frame 2 and a drum 3 for receiving up to 5 tons of nibs, rotatably mounted in the frame, e.g. resting on bearings. On one side the drum comprises a door 4 and an inlet 5 for the nibs. The drum roaster 1 comprises a mechanism 6, e.g. comprising pneumatic or hydraulic cylinders (not shown), for moving the door rearwards, i.e. away from the drum, in axial direction and over a limited distance, thus providing, after roasting, an annular clearance sufficient for the nibs to exit the drum, e.g. via a chute 7 and preferably without fully opening the door.

The other end of the drum is provided with an inlet 8 for air and a belt drive, comprising a plurality of pulleys 9, 10, a belt 11, and a motor 12, for rotating the drum. The inlet is coaxial with the axis of rotation of the drum and extends through the driven pulley 10 fixed to the drum. In this example, the inlet comprises a tube 8A extending through the greater part of the drum. A burner 13 is mounted near, e.g. below the drum, for heating the exterior wall of the drum with flue gas.

A fan 14 is provided for feeding the gas from the surroundings via a heat exchanger 16 and the inlet to the drum. The flue gas may be exhausted via the heat exchanger 16, such that heat may be exchanged between the exhausted flue gas and air to be fed to the drum 3. The circuits for flue gas from the burner and air to be fed to the drum are completely separated.

In addition to the inlet for the (parts of) beans, the door comprises a fluid outlet 15 for exhausting gas from the drum. In Fig. 1, the fluid outlet is indicated as part 15 being connected to the inlet 5 for the nibs. Part 15 is connected to the fluid outlet comprised by the door of the drum, such that exhausting gas from the drum may leave the drum via the fluid outlet 15.

The invention is not restricted to the above-described embodiments, which can be varied in a number of ways within the scope of the claims.

## Claims

1. Apparatus (1) for drying and/or roasting beans, such as cocoa beans, or parts of beans, such as nibs, comprising a frame (2), a drum (3) for receiving the beans or the parts of beans, rotatably mounted in the frame (2) and provided with an inlet (8) for a fluid, in particular a gas, such as heated air, a fan (14) for feeding the fluid via the inlet (8) to the drum (3), a driving means (9-12) for rotating the drum (3), and a burner (13) or the like for heating the exterior wall of the drum (3), wherein the fluid inlet (8) and the driving means (9-12) are located on the same end of the drum (3), the inlet (8) is coaxial with the axis of rotation of the drum (3) and wherein a door (4) is located on the end of the drum (3) opposite the fluid inlet (8) and the driving means (9-12).

2. Apparatus (1) according to claim 1, wherein the inlet (8) extends through a part of the driving means (9-12).

3. Apparatus (1) according to any one of the preceding claims, comprising an outlet (7) and/or inlet (5) for the beans or the parts of beans, which outlet (7) and/or inlet (5) is located on the end of the drum (3) opposite the fluid inlet (8) and the driving means (9-12), preferably in the door (4).

4. Apparatus (1) according to claim 3, comprising an outlet (15) for the fluid, in addition to the outlet (7) for the beans or the parts of beans, located on the end of the drum (3) opposite the fluid inlet (8) and the driving means (9-12).

5. Apparatus (1) according to any one of the preceding claims, wherein the inlet (8) for the fluid comprises a tube (8A) for containing the fluid and a means for returning materials originating from the drum to the drum.

6. Apparatus (1) according to claim 5, wherein said means for returning materials comprises a conveying screw positioned inside the tube (8A).

7. Apparatus (1) according to any one of the preceding claims, comprising a heater (16) and a controller for heating the fluid to a temperature in a range from 110 to 200 °C.

8. Apparatus (1) according to any one of the preceding claims, wherein the drum (3) has a capacity of at least 2000 kg, preferably at least 3000 kg of beans or parts of beans.

9. Apparatus (1) according to any one of the preceding claims, comprising a mechanism for moving the door (4) rearwards in axial direction thus providing sufficient clearance for the nibs to exit the drum (3).

10. Apparatus (1) according to claim 9, wherein the door (4) is movable over a distance in a range from 2 to 15 centimeters.

11. Apparatus (1) according to claim 11 or 12, wherein the clearance is at least substantially annular.

## Patentansprüche

1. Vorrichtung (1) zum Trocknen und/oder Rösten von Bohnen, wie etwa Kakaobohnen oder Bohnenteilen, wie etwa Bruch, die aufweist: einen Rahmen (2), eine Trommel (3) zum Aufnehmen der Bohnen oder der Bohnenteile, die drehbar in dem Rahmen (2) montiert ist, und mit einem Einlass (8) für ein Fluid, insbesondere ein Gas, wie etwa erhitzte Luft, versehen ist, einen Ventilator (14) zum Zuführen des Fluids über den Einlass (8) an die Trommel (3), eine Antriebseinrichtung (9 - 12) zum Drehen der Trommel (3), und einen Brenner (13) oder Ähnliches zum Heizen der Außenwand der Trommel (3), wobei der Fluideinlass (8) und die Antriebseinrichtung (9 - 12) an demselben Ende der Trommel (3) angeordnet sind, der Einlass (8) koaxial mit der Drehachse der Trommel (3) ist und wobei eine Tür (4) an dem Ende der Trommel (3) gegenüber dem Fluideinlass (8) und der Antriebseinrichtung (9 - 12) angeordnet ist.

2. Vorrichtung (1) nach Anspruch 1, wobei der Einlass (8) sich durch einen Teil der Antriebseinrichtung (9 - 12) erstreckt.

3. Vorrichtung (1) nach einem der vorhergehenden Ansprüche, die einen Auslass (7) und/oder Einlass (5) für die Bohnen oder die Bohnenteile aufweist, wobei der Auslass (7) und/oder der Einlass (5) an dem Ende der Trommel (3) gegenüber dem Fluideinlass (8) und der Antriebseinrichtung (9 - 12), vorzugsweise in der Tür (4), angeordnet ist.

4. Vorrichtung (1) nach Anspruch 3, die, zusätzlich zum Auslass für die Bohnen oder Bohnenteile, einen Auslass (15) für das Fluid , der an dem Ende der Trommel (3) gegenüber dem Fluideinlass (8) und der Antriebseinrichtung (9 - 12) angeordnet ist, aufweist.

5. Vorrichtung (1) nach einem der vorhergehenden Ansprüche, wobei der Einlass (8) für das Fluid ein Rohr (8A) zum Fassen des Fluids und eine Einrichtung zum Rückführen von Materialien, die von der Trommel stammen, an die Trommel aufweist.

6. Vorrichtung (1) nach Anspruch 5, wobei die Einrichtung zum Rückführen von Materialien eine Förderschraube aufweist, die im Inneren des Rohrs (8A) positioniert ist.

7. Vorrichtung (1) nach einem der vorhergehenden Ansprüche, die eine Heizeinrichtung (16) und eine Steuerung zum Heizen des Fluids auf eine Temperatur in einem Bereich von 110 bis 200°C aufweist.

8. Vorrichtung (1) nach einem der vorhergehenden Ansprüche, wobei die Trommel (3) eine Kapazität von wenigstens 2000 kg, vorzugsweise wenigstens 3000 kg für Bohnen oder Bohnenteile hat.

9. Vorrichtung (1) nach einem der vorhergehenden Ansprüche, die einen Mechanismus zum Rückwärtsbewegen der Tür (4) in Axialrichtung aufweist, wobei auf diese Weise ausreichend Spielraum für den Bruch zum Verlassen der Trommel (3) bereitgestellt wird.

10. Vorrichtung (1) nach Anspruch 9, wobei die Tür (4) über eine Strecke in einem Bereich von 2 bis 15 Zentimeter beweglich ist.

11. Vorrichtung (1) nach Anspruch 11 oder 12, wobei der Spielraum wenigstens im Wesentlichen ringförmig ist.

## Revendications

1. Appareil (1) pour sécher et/ou torréfier des grains, tels que des grains de cacao ou des parties de grains, tels que des grués, comprenant un bâti (2), un tambour (3) pour recevoir les grains ou les parties de grains, monté en rotation dans le bâti (2) et prévu avec une entrée (8) pour un fluide, en particulier un gaz tel que de l'air chauffé, un ventilateur (14) pour alimenter le fluide via l'entrée (8) au tambour (3), un moyen d'entraînement (9-12) pour faire tourner le tambour (3), et un brûleur (13) ou similaire pour chauffer la paroi extérieure du tambour (3), dans lequel l'entrée de fluide (8) et le moyen d'entraînement (9-12) sont positionnés sur la même extrémité du tambour (3), l'entrée (8) est coaxiale avec l'axe de rotation du tambour (3) et dans lequel une porte (4) est positionnée sur l'extrémité du tambour (3) opposée à l'entrée de fluide (8) et au moyen d'entraînement (9-12).

2. Appareil (1) selon la revendication 1, dans lequel l'entrée (8) s'étend à travers une partie du moyen d'entraînement (9-12).

3. Appareil (1) selon l'une quelconque des revendications précédentes, comprenant une sortie (7) et/ou une entrée (5) pour les grains ou les parties de grains, laquelle sortie (7) et/ou entrée (5) est positionnée sur l'extrémité du tambour (3) opposée à l'entrée de fluide (8) et au moyen d'entraînement (9-12), de préférence dans la porte (4).

4. Appareil (1) selon la revendication 3, comprenant une sortie (15) pour le fluide, en plus de la sortie (7) pour les grains ou les parties de grains, positionnée sur l'extrémité du tambour (3) opposée à l'entrée de fluide (8) et au moyen d'entraînement (9-12).

5. Appareil (1) selon l'une quelconque des revendications précédentes, dans lequel l'entrée (8) pour le fluide comprend un tube (8A) pour contenir le fluide et un moyen pour ramener les matériaux provenant du tambour, au tambour.

6. Appareil (1) selon la revendication 5, dans lequel ledit moyen pour ramener les matériaux comprend une vis de transport positionnée à l'intérieur du tube (8A).

7. Appareil (1) selon l'une quelconque des revendications précédentes, comprenant un dispositif de chauffage (16) et un organe de commande pour chauffer le fluide à une température dans une plage de 110 à 200 °C.

8. Appareil (1) selon l'une quelconque des revendications précédentes, dans lequel le tambour (3) a une capacité d'au moins 2 000 kg, de préférence d'au moins 3 000 kg de grains ou de parties de grains.

9. Appareil (1) selon l'une quelconque des revendications précédentes, comprenant un mécanisme pour déplacer la porte (4) vers l'arrière dans la direction axiale, fournissant ainsi le jeu suffisant pour que les grués sortent du tambour (3).

10. Appareil (1) selon la revendication 9, dans lequel la porte (4) est mobile sur une distance dans une plage de 2 à 15 centimètres.

11. Appareil (1) selon la revendication 11 ou 12, dans lequel le jeu est au moins sensiblement annulaire.
